Europäisches Patentamt

European Patent Office

Office européen des brevets

(19)

(11) Publication number: **0 138 386**
**B1**

(12) # EUROPEAN PATENT SPECIFICATION

(45) Date of publication of patent specification: **29.03.89**

(51) Int. Cl.⁴: **G 07 F 7/10, G 06 K 19/06**

(21) Application number: **84306269.6**

(22) Date of filing: **13.09.84**

(54) Identification card.

(30) Priority: **16.09.83 JP 169242/83**

(43) Date of publication of application:
**24.04.85 Bulletin 85/17**

(45) Publication of the grant of the patent:
**29.03.89 Bulletin 89/13**

(84) Designated Contracting States:
**DE FR GB**

(56) References cited:
**EP-A-0 114 368
DE-A-3 130 206
DE-A-3 130 213
DE-A-3 131 216
FR-A-2 533 047**

(73) Proprietor: **KABUSHIKI KAISHA TOSHIBA
72, Horikawa-cho Saiwai-ku
Kawasaki-shi Kanagawa-ken 210 (JP)**

(72) Inventor: **Uchihira, Naoshi c/o Patent Division
Toshiba Corporation Principal Office
1-1 Shibaura 1-chome Minato-ku Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

EP 0 138 386 B1

## Description

The present invention relates to a card, such as an identification card or credit card, for use in a data communication system which has a self-contained capability of protecting transmitted data against unauthorised use.

In data communication systems, such as a data communication system including on-line terminals (or automatic teller machines) coupled to a bank centre, it has always been important to protect transmitted data against unauthorised use. Recently, because of the popularisation of personal computers, which can be used as on-line terminals in an office or home, it has become even more important to protect data transmitted in a communication system against unauthorised use.

Identification cards with self-contained memory are known for use in authenticating personnel and/or equipment. For the purpose of data protection, the memory of such identification cards (hereinafter called ID cards) stores a key code and the on-line terminal encrypts transmitted data using the key code received from the ID card.

Other known ID cards employ a protection system in which random numbers are supplied to the ID card by an on-line terminal. The ID card outputs a key code in response to the random number and an encrypting circuit within the on-line terminal then encrypts transmitted data according to the key code. Such a system is to be found in US-A-3,764,742. However, such a protection system only works well if use of the on-line terminals is subject to direct control by the bank centre or access to the internal operating system is restricted.

In the known protection systems described above, the key code must be outputted from the ID card and supplied to an encrypting circuit in the on-line terminal. The step of outputting the key code from the ID card is undesirable because the outputted key code is prone to unauthorised use. For example, an unauthorised user could steal original data subject to data transmission by using decrypters available on the market. These decrypters could be used to monitor or tap the key code from the ID card and the encrypted data transmitted from the encrypting circuit. Alternatively, in ID cards which store original data for direct transmission, such as the unauthorised amount or transaction limit for the owner of the ID card, the owner could cut the output line for the original transmitted data and insert other forged data. Thus, conventional protection systems for preventing unauthorised use and forgery of transmitted data are inadequate.

It is an object of the present invention to provide an identification card which is capable of preventing unauthorised use and forgery of transmitted data.

The invention relates to a card having a self contained integrated circuit for communicating with a data communication system with which the card is to be used, the integrated circuit including memory means for storing data to be outputted to the communication system; and key code generating means for generating a key code by a logical operation between data in the memory means and a random number supplied to the card by the communication system, characterised in that the data the memory means stores includes a code number preassigned individually to the card for use by the key code generating means for generating the key code, and in that the integrated circuit has encrypting means connected to the memory means and the key code generating means for encrypting data stored in the memory means and to be outputted to the communication system, using the key code derived from the key code generating means.

In the use of the card of the present invention, the key code for encryption cannot be monitored or tapped from outside the card and encrypted transmitted data can only be taken from the card. Thus, the important information contained in the transmitted data is protected against unauthorised use or forgery even when the on-line terminals are not under the direct control of the bank centre or information centre of the data communication system, for example, when the on-line terminal is a personal computer used in the home or a portable terminal.

The invention will be more readily understood by way of example from the following description of ID cards in accordance therewith and their use in data communication systems. Reference is made to the accompanying drawings, in which:

Figure 1 is a block diagram of a cash management system in which a first embodiment of the ID card is used,

Figure 2 is an example of the ID card incorporating an IC chip having a self-contained encrypting function,

Figure 3 is a basic block diagram of the electrical circuits formed on the IC chip of Figure 2,

Figure 4 is a block diagram of the host system shown in Figure 1,

Figure 5 is a flow chart of the communication between the on-line terminal and the host system,

Figure 6 is a block diagram of the card reader/writer shown in Figure 1,

Figure 7 is a basic block diagram of the electrical circuits formed on a second embodiment of IC chip,

Figure 8 is a flow chart of the communication between the terminal and the host system for the second embodiment of the IC chip of Figure 7,

Figure 9A is an example of a third embodiment of IC chip, and

Figure 9B is a memory map of a control ROM used in the IC chip shown in Figure 9A.

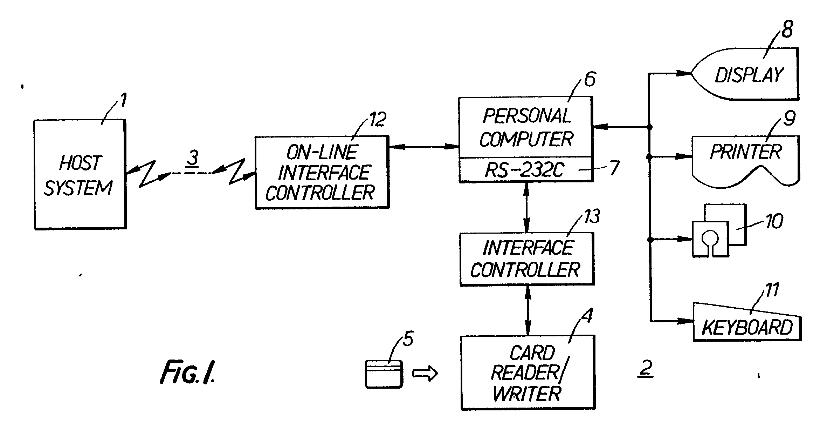

Figure 1 is a block diagram of a basic cash management system (CMS) which illustrates one example of the application of the identification card (ID card) of the present invention. The CMS includes host system 1 and a plurality of on-line terminals 2, each of which is connected to host system 1 through public communication line 3. For simplicity, only one terminal 2 is shown in Figure 1. The host system is a bank computer with a data base for use in performing a plurality of services. Terminal 2 generally includes a conventional personal computer system and card reader/writer (CRW) 4 to read/write ID card 5. Specifically, terminal 2 includes main frame personal computer 6 having RS-232C interface 7, display unit 8, printer 9, floppy disk unit 10 and keyboard 11. For example, a 16-bit personal computer known as PASOPIA 16 (tradename) made by Toshiba Corporation can be used as main frame personal computer 6. Terminal 2 further includes on-line interface controller 12 to communicate with host system 1 through line 3 and interface controller 13 to control operation of CRW 4 through RS-232C standard interface 7.

Any operator of the above described terminal can easily communicate with host system 1 by inserting card 5 into CRW 4 at any place such as an office, home, etc. However, since personal computer programs can be easily analysed and modified by a person skilled in computers, a more reliable data protection system is required to prevent malicious, unauthorized use of the on-line terminal.

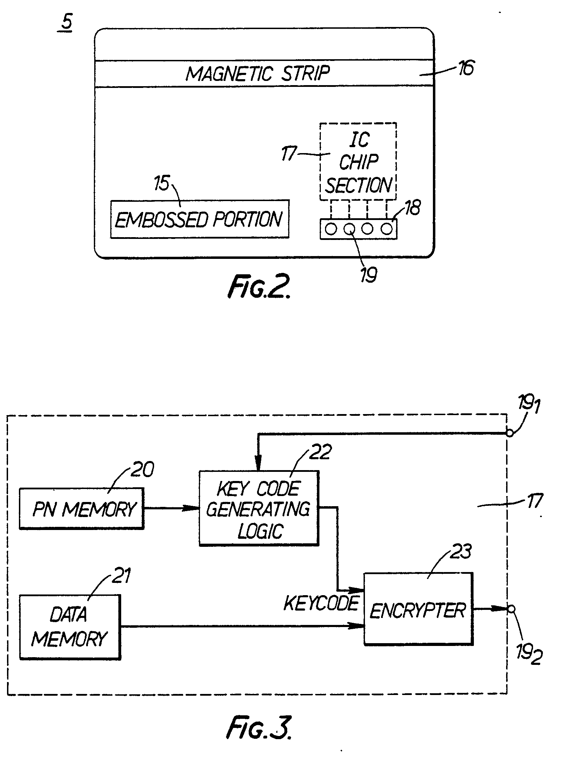

Figure 2 shows an ID card, which includes an IC chip, according to a preferred embodiment of this invention. Card 5 has a typical embossed portion 15, magnetic strip 16 for storing a personal identification number (PIN) as proof of identity, IC chip section 17 and input/output portion 18 for electrically connecting the IC chip to terminal 2. Input/output portion 18 includes a plurality of contact terminals 19 through which power is supplied and data is transmitted to or from the terminal.

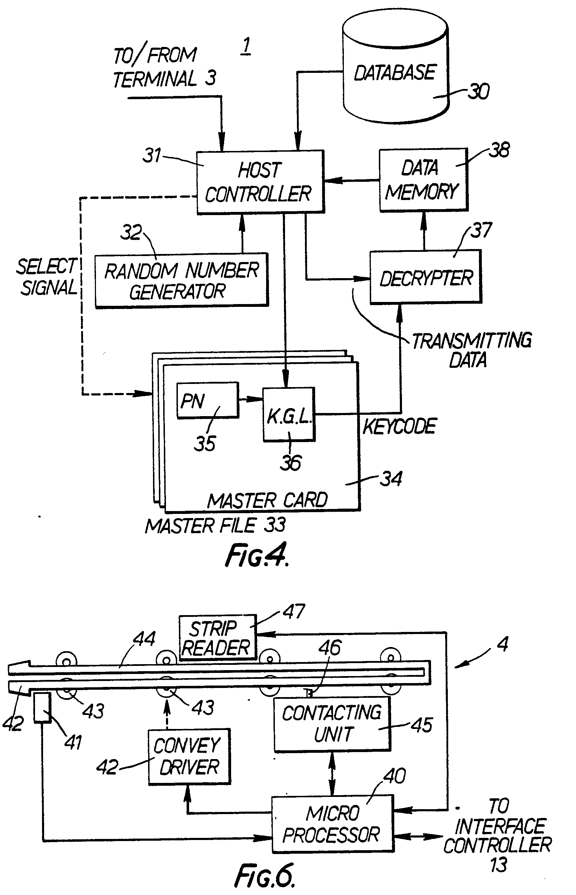

Figure 3 shows a block diagram of the electrical circuits forming IC chip 17. PN memory 20, data memory 21, key code generating logic circuit (KGL) 22 and encrypter 23 are integrated in one IC chip 17. PN memory 20 stores preassigned code number PN which is assigned to the user of the particular ID card, i.e. different preassigned code numbers are assigned to each ID card. Preassigned code number PN is unknown to the owner or operator of card 5, while the operator does know his PIN number. Data memory 21 stores important output data such as the account number of the owner of the ID card, a transaction limit amount given to the owner by the bank, etc. Key code generating logic circuit (KLG) 22 is a logic circuit for generating a key code by a logical operation between the preassigned code number and a random number supplied to the ID card through input terminal $19_1$. The logical operation should be kept secret, but it is usually unnecessary to use a very complicated logical operation. A simple logical operation, for example, an exclusive-OR operation between every bit of two numbers would suffice.

Encrypter 23 encrypts output data from data memory 21 using the key code derived from KGL 23; encryption takes place in accordance with the data encryption standard (DES). Encrypter 23 preferably is formed of a programmed microprocessor having a DES program subroutine. The encrypted data is outputted through output terminal $19_2$.

Figure 4 shows a block diagram of an example host system 1. Host system 1 includes data base 30 for storing information relating to all customers and host controller 31 for retrieving data from data base 30 and communicating with the on-line terminals. Random number generator 32, which is used in conventional data protection systems, is provided for generating random number (RN) and outputting this number when accessed. Master file 33 is provided for storing a plurality of master cards, each corresponding to one of the ID cards of all customers. Master card 34 includes PN memory 35 and key code generating logic circuit (KGL) 36. PN memory 35 stores the same preassigned code number PN stored in PN memory 20 of ID card 5. KGL also includes the same logic elements as is used in KGL 23 of ID card 5. Decrypter 37 is provided for decrypting data transmitted by on-line terminal 3. Data memory 38 stores the decrypted data outputted from decrypter 37.

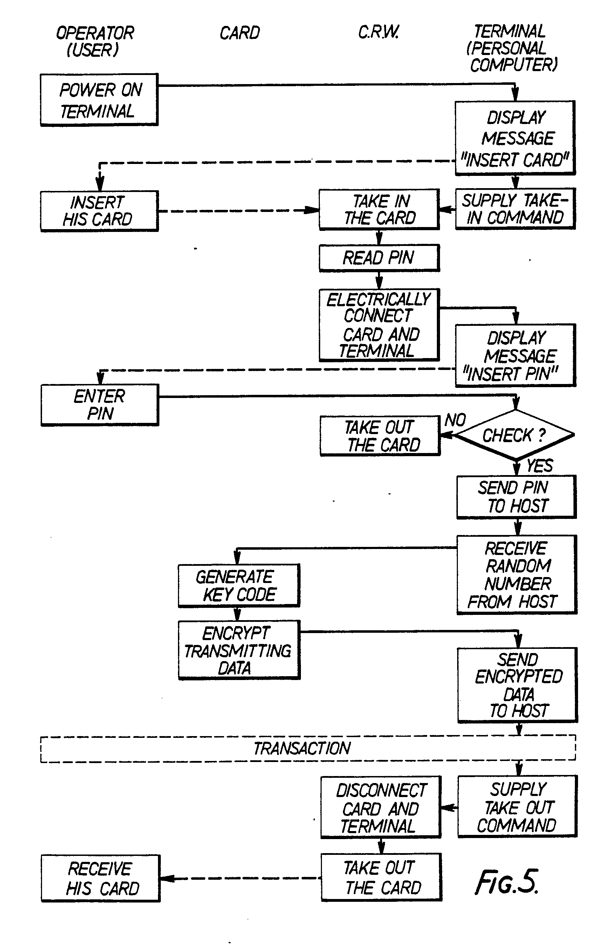

Figure 5 is a flow chart showing communication between the on-line terminal and the host system. Terminal 2 is initialized upon power on by the operator. Personal computer (PC) 6 loads programs from floppy disc unit 10 and maintains the telephone line through which it communicates with the host system. After initialization, display 8 displays a message for prompting the operator to insert his card and then PC 6 outputs a take-in command to CRW 4.

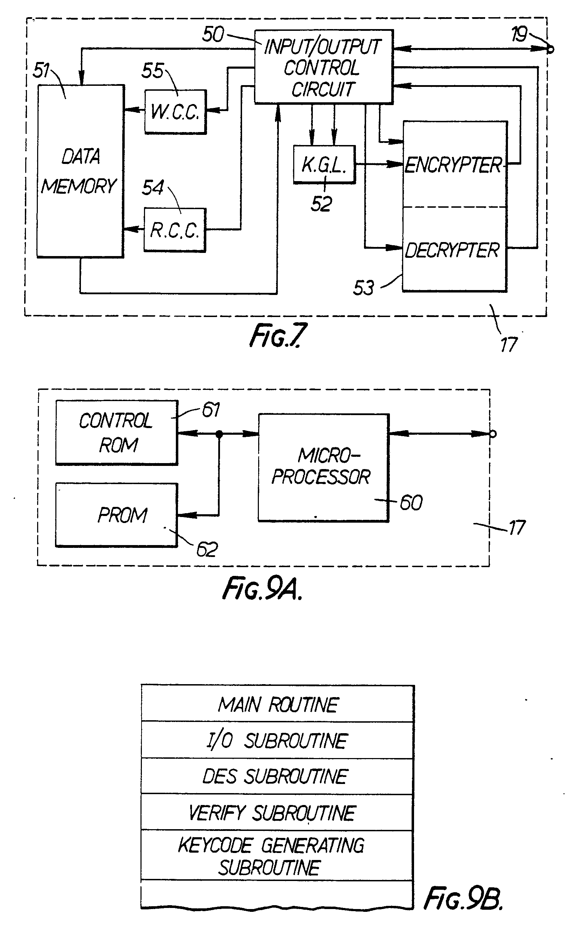

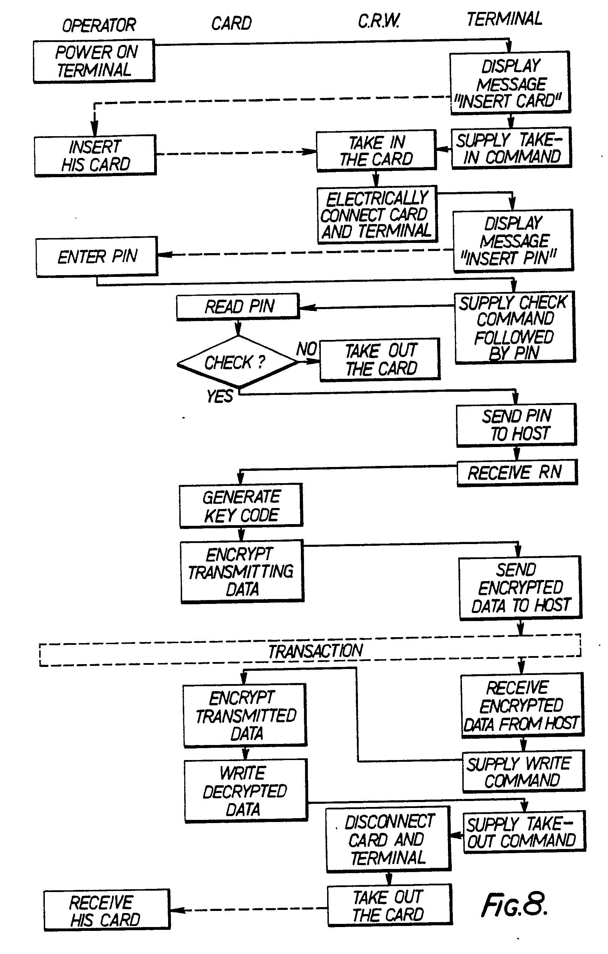

Referring to Figure 6, the take-in command is supplied to microprocessor (MP) 40 which acts as a controller for CRW 4. Responding to the take-in command, MP 40 waits for a sensing signal from card sensor 41. When the operator inserts his card into card insertion port 42, card sensor 41 outputs the sensing signal to MP 40. MP 40 activates driver 42 which drives a plurality of pairs of conveyor roller 43 disposed along guide 44 so that the ID card is conveyed from port 42 to a predetermined position along guide 44. During conveyance of ID card 5, strip reader 47 having a magnetic head reads the PIN numbers stored on magnetic strip 16. MP 40 then supplies the PIN number to PC 6.

After the ID card is taken in, Mp 40 activates contact device 45, which has a plurality of contact pins 46 corresponding to contact terminals 19 on the ID card. Contact device 45 mechanically contacts contact pins 46 with contact terminals 19 to establish electrical connection between IC chip 17 on the ID card and PC 6. Then MP 40 supplies a ready signal to PC 6.

Responding to the ready signal, PC 6 instructs display unit 8 to display a message which prompts the operator to input the PIN number. The PIN number is entered from keyboard 11 by the operator. PC 6 compares the PIN number entered from the keyboard and the PIN number read out from magnetic strip 16. If PC 6 fails to detect coincidence of PIN numbers, then a take-out command is supplied to CRW 4 for taking out the ID card. If PC 6 detects coincidence of PIN numbers, it transmits the PIN number to the host system through communication line 3.

After host controller 31 receives the PIN number, it electrically or mechanically selects the master card 34 from master file 33 corresponding to the particular PIN number. Then host controller 31 receives a random number RN from random number generator 32 and supplies it to KGL 36 of the selected master card 34 and PC 6 through communication line 3.

After receiving random number RN, PC 6 supplies a transfer command followed by random number RN to MP 40. MP 40 supplies random number RN to KGL 22 of ID card 5 through contact pin 46 and contact terminal $19_1$. Then KGL 22 generates a key code from preassigned code number PN of PN memory 20 and random number RN from the host system. Upon receiving the key code from KGL 22, encrypter 23 encrypts the output data stored in data memory 21. The encrypted data is supplied to MP 40 through contact terminal $19_2$ and contact pin 46. Then MP 40 supplies the encrypted data to PC 6. PC 6 sends the encrypted data to host controller 31 through communication line 3.

The host controller supplies the encrypted data transmitted from the on-line terminal to decrypter 37. Decrypter 37 decrypts the encrypted data using the key code generated by KGL 36 of master card 34. The decrypted data from decrypter 37 is stored in data memory 38. After checking the decrypted data, host controller 31 accesses data base 30 in accordance with the decrypted data, which includes the account number and the transaction limit amount, so that a transaction between the operator and bank can occur.

At the end of the transaction, PC 6 supplies a take-out command to MP 40. MP 40 instructs contact device 45 to release contact pins 46 from contact terminals $19_1$, and then instructs driver 42 to take out ID card 5.

According to the aforementioned embodiment, terminal 2 only functions to guide the operator as to what he should do next and transfers data commands. The most important encryption is executed within IC chip 17 of ID card 5. The operator cannot monitor the key code and cannot supply any other data to encryptor 23 even if he analyses the programs of PC 6. Therefore, unauthorized users are prevented from supplying malicious data to the host system by using the account number of another person, and the owner of the Id card is prevented from making an improper transaction such as executing a transaction exceeding a predetermined limit.

Figure 7 shows the block diagram of the electrical circuits of an IC chip of another embodiment of ID card. The IC chip includes input/output control circuit 50, data memory 51, key code generating logic circuit (KGL) 52, encrypter/decrypter 53, read control circuit (RCC) 54 and write control circuit (WCC) 55. Data memory 51 stores the PIN number, preassigned code number PN, the account number, account balance information, etc. The above data, which is read out by RCC 54 and WCC 55, is provided for updating the account balance information after each transaction. Since the PIN number is stored in data memory 51, magnetic strip 16 of ID card 5 and strip reader 67 of CRW 4 are unnecessary.

Figure 8 is a flow chart showing communication between the on-line terminal and the host system using an ID card which has an IC chip as shown in Figure 7. Most operations are similar to those described above in connection with Figure 5 except:

(a) the IC chip checks the PIN number; and

(b) the IC chip decrypts transmitted data from the host system and writes it into the data memory.

After the PIN number is entered at keyboard 11 by the operator, PC 6 supplies a check command followed by the entered PIN number to MP 40. MP 40 transfers the check command and PIN number to input/output control circuit (ICC) 50. Then ICC 50 drives RCC 54 to read the PIN number stored in data memory 51, and compares the entered PIN number with the stored PIN number. If ICC 50 does not detect coincidence, it outputs the take-out command to MP 40. If ICC 50 detects coincidence, it outputs a verified signal to MP 40. MP 40 then transfers the verified signal to PC 6 and PC 6 continues to operate in the manner shown in Figure 5.

At the end of the transaction, the host controller has new account balance information. This information is encrypted by an encrypter (not shown) provided in host system 1 and the encrypted data relating to the new account balance information is sent to on-line terminal 1. After receiving the encrypted data, PC 6 supplies a write command followed by the encrypted data to MP 40. Mp 40 then transfers this data to ICC 50.

ICC 50 supplies the encrypted data to encrypter/decrypter 53 for decryption. Upon receiving the decrypted data, which is the new account balance information, ICC 50 drives WCC 55 to write this information into data memory 51 of the ID card. After that, ID card 5 is taken out of CRW 4 in the manner shown in Figure 5.

The above operation also applies to the ID card using an IC chip having a microprocessor such as shown in Figure 9A. Control ROM 61 is a read only memory storing the control program for microprocessor 60. Figure 9B shows a memory map for control ROM 61 including such programs as a main routine, an I/O subroutine for sending and/or receiving commands and data, a DES subroutine for the encrypting and/or decrypting operations, a verify subroutine for checking PIN numbers, a key code generating subroutine for generating a key code, etc. PROM 62, which is a programmable read only memory, is able to write in some data such as, for example, the PIN number, the account number, the transaction limit amount, the account balance information, the date when the card is used, the history of verifications, etc. Since PROM 62 can store most of the information used in a transaction with a particular cards owner, which information was stored in the data base of the host system in the other embodiments described above, the memory capacity of the data base can be greatly reduced.

If it is necessary to keep the PIN number secret, even in the event the communication line is tapped, the encrypted PIN number may be transmitted by the on-line terminal as described, for example, in U.S. Patent No. 4,123,747. It is also possible to use preassigned code number PN instead of the PIN number as a code for selecting information from the master cards. Furthermore, the encrypter in the ID card also can be used for encrypting all data which is transmitted through the communication line from the keyboard of the on-line terminal.

## Claims

1. A card (5) having a self-contained integrated circuit (17) for communicating with a data communication system (1, 2, 3) with which the card is to be used, the integrated circuit including memory means (21, 51, 62) for storing data to be outputted to the communication system; and key code generating means (22) for generating a key code by a logical operation between data in the memory means (21, 51, 62) and a random number supplied to the card (5) by the communication system (1, 2, 3), characterised in that the data the memory means (21, 51, 62) stores includes a code number preassigned individually to the card (5) for use by the key code generating means (22) for generating the key code, and in that the integrated circuit (17) has encrypting means (23, 53, 60) connected to the memory means (21, 51, 62) and the key code generating means (22) for encrypting data stored in the memory means and to be outputted to the communication system, using the key code derived from the key code generating means (22).

2. A card according to claim 1 which further includes at least one input terminal (19) adapted to connect electrically with a corresponding terminal of the communicating system and connected to the key code generating means (22), whereby the random number is supplied.

3. A card according to claim 1 or claim 2, wherein the integrated circuit (17) further includes decrypting means (53) responsive to the received key code for decrypting input data from the communication system (1, 2, 3).

4. A card according to claim 3, wherein the integrated circuit (17) has means (55) for writing the input data after decryption into the memory means (51).

## Patentansprüche

1. Identifizierungskarte (5) mit einem eingebauten integrierten Schaltkreis (17) zur Kommunikation mit einem Datenverarbeitungssystem (1, 2, 3), mit dem die Karte zu benutzen ist, wobei der integrierte Schaltkreis Speichermittel (21, 51, 62) zum Speichern von an das Datenverarbeitungssystem abzugebende Daten aufweist, und mit einer Einrichtung (22) zur Erzeugung eines Schlüsselcodes durch eine logische Operation zwischen den Daten in den Speichermitteln (21, 51, 62) und einer Zufallszahl, die der Karte (5) durch das Datenverarbeitungssystem (1, 2, 3) zur Verfügung gestellt wird, dadurch gekennzeichnet, daß die von den Speichermitteln (21, 51, 62) gespeicherten Daten eine Codezahl umfassen, die der Karte (5) individuell vorher zugewiesen ist zur Benutzung durch die den Schlüsselcode erzeugende Einrichtung (22) zur Erzeugung des Schlüsselcodes, und daß der integrierte Schaltkreis (17) eine Verschlüsselungseinrichtung (23, 53, 60) aufweist, die mit den Speichermitteln (21, 51, 62) und mit der Schlüsselcode erzeugenden Einrichtung (22) verbunden ist zur Verschlüsselung von Daten, die in den Speichermitteln gespeichert sind und an das Datenverarbeitungssystem ausgegeben werden sollen, indem der Schlüsselcode verwendet wird, der von der Schlüsselcode erzeugenden Einrichtung (22) abgeleitet ist.

2. Karte nach Anspruch 1, die ferner wenigstens einen Eingangsanschluß (19) aufweist, der elektrisch mit einem entsprechenden Anschluß des Datenverarbeitungssystems verbindbar ist und der mit der Schlüsselcode erzeugenden Einrichtung (22) verbunden ist, zur Übermittlung der Zufallszahl.

3. Karte nach Anspruch 1 oder 2, bei der der integrierte Schaltkreis (17) ferner eine Entschlüsselungseinrichtung (53) aufweist, die auf den empfangenen Schlüsselcode anspricht zum Entschlüsseln von vom Datenverarbeitungssystem (1, 2, 3) kommenden Eingangsdaten.

4. Karte nach Anspruch 3, bei der der integrierte Schaltkreis (17) eine Einrichtung (55) zum Einschreiben der Eingangsdaten in das Speichermittel (51) nach der Entschlüsselung aufweist.

## Revendications

1. Carte (5) possédant un circuit intégré indépendant (17) pour communiquer avec le système de transmission de données ou de communication (1, 2, 3) avec lequel elle est appelée à être utilisée, ce circuit intégré comprenant une mémoire (21, 51, 62) pour conserver les données devant être émises vers le système de communication; et des moyens (22) générant un code-clé par une opération logique s'effectuant entre les données présentes dans ladite mémoire (21, 51, 62) et un nombre aléatoire fourni à la carte par le système de communication (1, 2, 3), caractérisée en ce que les données conservées dans la mémoire (21, 51, 62) incluent un code numérique préassigné individuellement à la carte (5) aux fins d'utilisation par les moyens (22) générant le code-clé pour générer ce dernier, et en ce que le circuit intégré (17) comporte des moyens de cryptage (23, 53, 60) connectés à ladite mémoire (21, 51, 62) et aux moyens (22) générant le code-clé afin de crypter les données mémorisées pour crypter les données contenues dans la mémoire et qui doivent être délivrées au système de communication en utilisant le code-clé provenant des moyens de génération de code-clé (22).

2. Carte selon la revendication 1, caractérisée en ce qu'elle comprend, en outre, au moins, une borne d'entrée (19) adaptée à être connectée à une borne correspondante du système de communication et connectée aux moyens (22) générant le code-clé, ce qui fait que le nombre aléatoire est délivré.

3. Carte selon la revendication 1 ou 2, caractérisée en ce que le circuit intégré (17) comprend, en outre, des moyens de décryptage (53) répondant au code-clé reçu pour décrypter les données d'entrée provenant du système de communication (1, 2, 3).

4. Carte selon la revendication 3, caractérisée en ce que le circuit intégré (17) a des moyens (55) pour inscrire les données d'entrée dans la mémoire (51) après qu'elles ont été décryptées.

FIG. 1.

EP 0 138 386 B1

5

MAGNETIC STRIP — 16

IC CHIP SECTION — 17

15
EMBOSSED PORTION

18

○○○○ — 19

*FIG.2.*

19₁

20
PN MEMORY

22
KEY CODE GENERATING LOGIC

17

21
DATA MEMORY

23
ENCRYPTER

KEYCODE

19₂

*FIG.3.*

TO/FROM
TERMINAL 3

*1*

DATABASE

*30*

*31*

HOST
CONTROLLER

DATA
MEMORY

*38*

*32*

SELECT
SIGNAL

RANDOM NUMBER
GENERATOR

DECRYPTER

*37*

TRANSMITTING
DATA

PN

K.G.L.

KEYCODE

*35*

*36*

*34*

MASTER CARD

MASTER FILE 33

**Fig.4.**

STRIP
READER

*47*

*44*

*46*

*4*

*43*

*43*

*42*

*41*

CONTACTING
UNIT

*45*

CONVEY
DRIVER

*42*

MICRO
PROCESSOR

*40*

TO
INTERFACE
CONTROLLER
*13*

**Fig.6.**

3

EP  0 138 386  B1

OPERATOR (USER)  CARD  C.R.W.  TERMINAL (PERSONAL COMPUTER)

Fig.5.

4

FIG.7

FIG.9A.

| MAIN ROUTINE |
| :---: |
| I/O SUBROUTINE |
| DES SUBROUTINE |
| VERIFY SUBROUTINE |
| KEYCODE GENERATING SUBROUTINE |
| |

FIG.9B.

EP 0 138 386 B1

| OPERATOR | CARD | C.R.W. | TERMINAL |
|---|---|---|---|

POWER ON TERMINAL

DISPLAY MESSAGE "INSERT CARD"

INSERT HIS CARD

TAKE IN THE CARD

SUPPLY TAKE-IN COMMAND

ELECTRICALLY CONNECT CARD AND TERMINAL

DISPLAY MESSAGE "INSERT PIN"

ENTER PIN

READ PIN

SUPPLY CHECK COMMAND FOLLOWED BY PIN

CHECK ? — NO → TAKE OUT THE CARD

YES

SEND PIN TO HOST

RECEIVE RN

GENERATE KEY CODE

ENCRYPT TRANSMITTING DATA

SEND ENCRYPTED DATA TO HOST

TRANSACTION

ENCRYPT TRANSMITTED DATA

RECEIVE ENCRYPTED DATA FROM HOST

WRITE DECRYPTED DATA

SUPPLY WRITE COMMAND

DISCONNECT CARD AND TERMINAL

SUPPLY TAKE-OUT COMMAND

RECEIVE HIS CARD

TAKE OUT THE CARD

FIG.8.

6